(19)

**Europäisches Patentamt**
**European Patent Office**
**Office européen des brevets**

(11) **EP 4 167 199 B1**

(12) **EUROPEAN PATENT SPECIFICATION**

(45) Date of publication and mention
of the grant of the patent:
**19.11.2025  Bulletin 2025/47**

(21) Application number: **21382922.9**

(22) Date of filing: **14.10.2021**

(51) International Patent Classification (IPC):
*G06V 40/18* *(2022.01)*

(52) Cooperative Patent Classification (CPC):
**G06V 40/18**

(54) **METHOD AND SYSTEM FOR TRACKING AND QUANTIFYING VISUAL ATTENTION ON A COMPUTING DEVICE**

VERFAHREN UND SYSTEM ZUR VERFOLGUNG UND QUANTIFIZIERUNG DER VISUELLEN AUFMERKSAMKEIT EINER RECHENVORRICHTUNG

PROCÉDÉ ET SYSTÈME DE SUIVI ET DE QUANTIFICATION DE L'ATTENTION VISUELLE SUR UN DISPOSITIF INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.04.2023  Bulletin 2023/16**

(73) Proprietor: **Telefonica Innovacion Digital SL**
**28050 Madrid (ES)**

(72) Inventors:
- **Katevas, Kleomenis**
  **28013 Madrid (ES)**
- **Arapakis, Ioannis**
  **28013 Madrid (ES)**
- **Giménez Funes, Eduard**
  **28013 Madrid (ES)**

(74) Representative: **Carlos Hernando, Borja**
**Garrigues IP, S.L.P.**
**Plaza de Colón, 2**
**28046 Madrid (ES)**

(56) References cited:
**US-A1- 2017 196 451**

- ZHOU XIAOLONG ET AL: "Learning A 3D Gaze Estimator with Improved Itracker Combined with Bidirectional LSTM", 2019 IEEE INTERNATIONAL CONFERENCE ON MULTIMEDIA AND EXPO (ICME), IEEE, 8 July 2019 (2019-07-08), pages 850 - 855, XP033590265, DOI: 10.1109/ICME.2019.00151
- YIHUA CHENG ET AL: "Appearance-based Gaze Estimation With Deep Learning: A Review and Benchmark", ARXIV.ORG, CORNELL UNIVERSITY LIBRARY, 201 OLIN LIBRARY CORNELL UNIVERSITY ITHACA, NY 14853, 26 April 2021 (2021-04-26), XP081944397
- ADIBA AMALIA I ET AL: "Gaze Tracking in 3D Space with a Convolution Neural Network "See What I See"", 2017 IEEE APPLIED IMAGERY PATTERN RECOGNITION WORKSHOP (AIPR), IEEE, 10 October 2017 (2017-10-10), pages 1 - 7, XP033399287, DOI: 10.1109/AIPR.2017.8457962

## Description

Technical Field

The present invention is directed, in general, to the field of automatic tracking methods. In particular, the invention relates to a method and a system for tracking and quantifying visual attention on a computing device.

Background of the Invention

Recent advances in neuroscience indicate that our brain's resources are involuntarily triggered by sound and motion; hence the screens literally seize scarce mental resources. To put it differently, humans have an extreme sensitivity to goal interference from distractions by irrelevant information. Given the established market value of time and attention, our visual focus is considered one of the most valuable resources in the world. It powers the giant consumer and tech firms of our time that sell public-screen advertising to captive audiences. This provides in return enough ad revenue to allow those firms to invest in innovation activities and offer a wide range of free services and products.

Existing formats of measuring attention adopt either pay-per-impression (PPI) or pay-per-click (PPC) schemes, e.g., a user being exposed to something once or clicking on an item. However, such measures are imperfect. An impression is only an opportunity to see (OTS), and advertisers have always known that people get up during commercial breaks: no one knows which articles are being read in a newspaper; more than one person might read it, which leads to hard to prove pass-along multipliers. Circulation figures don't represent the total number of readers, but the total possible number. Moreover, if clicks or pageviews are one of the main objectives of the advertisers, they need not be the only, nor the most important. This is especially the case for advertisers whose campaigns aim to generate mainly brand or product awareness, rather than to induce direct online sales - which is the case for many, if not most, of the highest-value advertisers.

Attention is a complex and analogue aspect of consciousness (its most directed form) and, despite having many different facets, it is often converted into the simple, inherently binary, impression. However, if consumer attention to ads or other direct displays could be measured in an accurate and reliable way, not only it would provide a more effective target for advertiser campaigns, but it could also serve as a basis to define auctions which directly price user attention, thereby further aligning the platforms' incentives with the objectives of the advertisers.

Automatic gaze tracking methods have been used in the recent years for various purposes, including measuring ad attention or enabling for gesture-less user-device interactions. Most of these methods have been tested in the desktop setting, while the few reported attempts that addressed the mobile setting report low accuracy and require continuous calibration. Additionally, the aforementioned methods rely on expensive sensors, such as infrared eye trackers, that limit their scaling capacity. Other methods employ touch-based interactions (e.g., tracking zoom/pinch gestures and scroll activity) to produce an estimation of the user gaze which, at best, are weakly correlated with visual attention. However, 42% of the time spent on websites is by mobile users, while similar trends are reported for the percentage of page views per visit, which creates an opportunity for a novel attention measurement technology to take root; one which can offer accurate, reliable, and scalable measurements.

The following gaze tracking methods and other related technologies are known:

1. Non-video-based eye tracking: Eye tracking is the measure of the gaze, motion and position of the eyes. It is achieved through the use of specialised hardware or software-based methods, such as optical, electric, magnetic, and image-based, most of them using some invasive approach to get the measurements, (head-mounted sensors), or just requiring additional equipment (optical sensors) to do the tracking.

2. Magnetic eye tracking: On the high end of invasive eye tracking devices, the magnetic sensing tracks the magnetic field in a wire embedded in a silicone ring placed at the sclera of the eye. The voltage is measured with physical connections to the coils. This procedure offers an accuracy better than 0.1 degrees but suffers from the drawbacks of being invasive, requiring specialised equipment and having a high energy consumption profile [16].

3. Electric eye tracking: Electric eye tracking is a less invasive approach compared to the magnetic variant, and it can be performed by attaching a set of sensors to objects, such as smart glasses. These sensors allow to measure the electric potential difference generated by the rotation of the ocular globe using electrooculography (EOG). This category of eye tracking technology produces less reliable and accurate results, but it is useful for collecting data related to eye blinking, facial expressions, etc. [5].

4. Optical (infrared) eye tracking: In infrared gaze tracking, infrared light is projected on the sclera of the users' eyes [19]. The gradient of the infrared light reflected by the eyes' surface, contains information related to the changes in eye position. The infrared light sources can be placed in head-mounted devices or smart wearables. The range of motion of the eye that can be tracked by this method is limited to about 30 degrees for each angle. Infrared-based methods are a more accurate technology of gaze tracking compared to EOG, but they are sensitive to external light conditions. Some modern methods use a combination of the methods used for video-based eye tracking and infrared light sensing [4]. The combination of infrared eye tracking with lenses has also been explored, resulting in substantial effectiveness and efficiency improvements [9].

5. Lens-based eye tracking: Some of the most recent works use smart lenses to perform gaze tracking [13]. This is a promising approach with low computational cost and high accuracy. However, the use of expensive, and potentially uncomfortable equipment, is required. Lately, the feasibility of laser infrared emitting lenses has also been explored [9], achieving an accuracy in the range of 0.3 degrees.

6. Video-based eye tracking: The most popular eye-tracking methods are video-based. To perform video-based eye tracking, a camera must record the movements of the user and estimate the gaze point. It is common to use infrared light to perform calculations using the reflection of the infrared light on the eye, as a reference to extrapolate the rotation of the eye and, as an extension, its gaze position. Another approach to camera-based eye tracking is from the recorded video data, using ML techniques. There are different formats of video sources used for video tracking. Standard video sources are robust even when used in small- to mid-range distances (more than a meter). Mobile device and self-recorded video sources offer a view closer to the head of the user and are usually less robust.

7. Static setup-based eye tracking: Many works use computer vision methods to reconstruct the gaze of the user captured in a video sequence [6]. The lack of use of sensors in this kind of tracking results in performance curves similar to those observed in [7], where ML methods can easily outperform geometric-based methods, while the hybrid solution does not improve over ML-based solutions if enough training data are available [18].

8. Mobile eye tracking: Eye tracking on a mobile device introduces some additional constraints, such as a bigger probability of recording the video while being held, therefore not as stable as in some other setups, and a variable distance from the user's face. Since, nowadays, most of the news, and web content in general, is consumed through mobile devices, having a device that accurately measures the gaze of the viewer makes a high-value use case. Despite the lack of stability, mobile devices offer access to inertial measurement units (IMU) and their additional sensors offer more sophisticated means of data capturing, e.g., being able to record the depth of the picture and other data that the manufacturers use for verification purposes. The most common approach to achieve this kind of gaze tracking is via the use of a wearable device, recording the area around the eye, as seen in [11, 12, 15, 18]. Present invention takes another approach, using the mobile device to track the face of the user and extract the attention information from the images, similarly to what is discussed in [8, 10]. The results reported by these studies indicate that the variability in the illumination source, appearance, and viewing angle determine the performance of the attention tracking significantly more than the volume of training data per user, especially in a calibration-free scenario.

9. Similar software: Most gaze tracking methods that use a video source to achieve gaze tracking rely on software solutions. Some use a combination of hardware and software [18], while others aim to perform the task with the minimal amount of hardware possible, in order to reproduce real life conditions [17]. In [1], the authors propose a software-based gaze tracking as a tool integrated in a web browser, in order to perform evaluations on the web pages viewed by the user.

The above-described solutions rely on invasive methods to acquire gaze position measurements or require additional equipment (e.g., optical sensors) that have a high energy consumption profile and may be subjective to environmental noise (e.g., light conditions or electromagnetic interference). Moreover, they offer inferior performance, e.g., due to the limited range of motion of the eye that can be tracked for each angle, have limited scaling capacity and require an initial calibration stage. Likewise, the current solutions assume that the device and the user's head remain constant, if either of those is moved, another calibration stage is required, and do not provide capabilities for running the service on low-resources devices such as mobile phones.

Some patent applications are also known. For example, the US20170177081-A1 discloses methods and systems to facilitate eye tracking control on mobile devices. An image of a portion of a user is received at an eye tracking device, where the image includes reflections caused by light emitted on the user from one or more light sources located within the eye tracking device. One or more eye features associated with an eye of the user is detected using the reflections. Point of regard information is determined using the one or more eye features, where the point of regard information indicates a location on a display of a computing device coupled to the eye tracking device at which the user was looking when the image of the portion of the user was taken. The point of regard information is sent to an application capable of performing a subsequent operation using the point of regard information.

The US20160135675-A1 discloses optical system in which an optical parameter of an eye is detected using an image collection apparatus that collects an image presented by a fundus. An imaging apparatus adjusts an imaging parameter of an optical path between an eye and the image collection apparatus, wherein the image collection apparatus obtains the clearest image that satisfies a defined clarity criterion or condition. An image processing apparatus processes the clearest image to obtain an optical parameter of the eye. The image of the fundus is captured, and an imaging parameter known in the optical path when the clearest image is captured is found, so that a direction currently being watched by the eye and a distance between the eye and a focusing point can be obtained through optical calculation. Consequently, a position of the focusing point of the eye can be determined precisely for a wide range of concurrent applications for eye control interaction.

Patent US9459451-B2 provides a transparent waveguide for use in eye tracking that includes an input-coupler and an output-coupler. The input-coupler comprises a plurality of curved grating lines having a radially varying pitch. When positioned in front of an eye illuminated with infrared light, infrared light beams reflected from the eye and incident on the input-coupler enter the waveguide at the input-coupler, propagate through the waveguide by way of total internal reflections, and exit the waveguide proximate the output-coupler. The radially varying pitch of the curved grating lines of the input-coupler provides angular encoding of infrared light incident on the input-coupler, and more specifically, causes different beams of infrared light incident on respective different horizontal and vertical positions of the input-coupler to propagate through the waveguide at respective different angles of reflection and exit the waveguide at respective different angles of incidence relative to a surface of the waveguide through which infrared light beams exit.

International patent application WO2016183464-A1 describes a system and method of deep learning using deep networks to predict new views from existing images may generate and improve models and representations from large-scale data. This system and method of deep learning may employ a deep architecture performing new view synthesis directly from pixels, trained from large numbers of posed image sets. A system employing this type of deep network may produce pixels of an unseen view based on pixels of neighboring views, lending itself to applications in graphics generation. ZHOU XIAOLONG ET AL: "Learning A 3D Gaze Estimator with Improved Itracker Combined with Bidirectional LSTM",2019 IEEE INTERNATIONAL CONFERENCE ON MULTIMEDIA AND EXPO (ICME), IEEE, 8 July 2019 (2019-07-08), pages 850-855, discloses 3D gaze estimator by improving the Itracker and employing a many-to-one bidirectional LSTM (bi-LSTM). Improving the conventional Itracker is achieved by removing the face-grid and reducing one network branch via concatenating the two-eye region images to predict the subject's gaze of a single frame. Then, the bi- LSTM is applied to fit the temporal information between frames to estimate gaze vector for video sequence.

US 2017/196451 A1 discloses remote eye tracking, utilizing corneal reflection and pupil center. It is assumed there is a target screen plane at which the subject is looking (e.g., television screen, computer screen, electronic tablet or smart phone display).

Contrary to existing approaches, present invention relies on data that are easily captured from a computing device. These are photo or video frames taken from the device's camera and combined with depth information either automatically inferred from post-processing or directly captured from a LiDAR sensor, as well as sensory data acquired via embedded sensors on the computing device, such as motion and orientation. By modeling the position of the prone and the head, present invention's approach does not require any previous calibration before using it, even when the users move the device or his/her head. Moreover, it can run within low-resource devices, such as of a modern smartphone.

**References:**

[1] Eyesite: A framework for browser-based eye tracking studies. 2017.

[2] CHI EA '20: Extended Abstracts of the 2020 CHI Conference on Human Factors in Computing Systems, New York, NY, USA, 2020. Association for Computing Machinery.

[3] Fadi Boutros, Naser Damer, Kiran Raja, Raghavendra Ramachandra, Florian Kirchbuchner, and Arjan Kuijper. On benchmarking iris recognition within a head-mounted display for ar/vr application, 2020.

[4] Braiden Brousseau, Jonathan Rose, and Moshe Eizenman. Hybrid eye-tracking on a smart- phone with cnn feature extraction and an infrared 3d model. Sensors, 20(2), 2020.

[5] Andreas Bulling, Daniel Roggen, and Gerhard Troster. Wearable EOG goggles: Seamless sensing and context-awareness in everyday environments. Journal of Ambient Intelligence and Smart Environments, 1(2):157-171, 2009.

[6] Ilke Demir and Umur A. Ciftci. Where do deep fakes look? synthetic face detection via gaze tracking, 2021.

[7] Amogh Gudi, Xin Li, and Jan van Gemert. Efficiency in real-time webcam gaze tracking, 2020.

[8] Qiong Huang, Ashok Veeraraghavan, and Ashutosh Sabharwal. Tabletgaze: Unconstrained appearance-based gaze estimation in mobile tablets, 2016.

[9] A. Khaldi, E. Daniel, L. Massin, Camilla Kärnfelt, F. Ferranti, C. Lahuec, F. S'eguin, V. Nourrit, and J. de Bougrenet de la Tocnaye. A laser emitting contact lens for eye tracking. Scientific Reports, 10, 2020.

[10] Kyle Krafka, Aditya Khosla, Petr Kellnhofer, Harini Kannan, Suchendra Bhandarkar, Wojciech Matusik, and Antonio Torralba. Eye tracking for everyone, 2016.

[11] B. Li, Hong Fu, Desheng Wen, and W. Lo. Etracker: A mobile gaze-tracking system with near-eye display based on a combined gaze-tracking algorithm. Sensors (Basel, Switzer- land), 18, 2018.

[12] Kristian Lukander, S. Jagadeesan, H. Chi, and K. Muller. Omg!: a new robust, wearable and affordable open source mobile gaze tracker. In MobileHCl '13, 2013.

[13] Loic Massin, Fabrice Seguin, Vincent Nourrit, Daniel Emmanuel, Jean-Louis Tocnaye, and Cyril Lahuec. Smart contact lens applied to gaze tracking. IEEE Sensors Journal, 21:1-1, 07 2020.

[14] Addison Mayberry, Pan Hu, Benjamin Marlin, Christopher Salthouse, and Deepak Ganesan. Ishadow: Design of a wearable, real-time mobile gaze tracker. In Proceedings of the 12th Annual International Conference on Mobile Systems, Applications, and Services, Mo- biSys '14, page 82-94, New York, NY, USA, 2014. Association for Computing Machinery.

[15] Takashi Nagamatsu, Michiya Yamamoto, and Hiroshi Sato. Mobigaze: Development of a gaze interface for handheld mobile devices. In CHI '10 Extended Abstracts on Human Factors in Computing Systems, CHI EA '10, page 3349-3354, New York, NY, USA, 2010. Association for Computing Machinery.

[16] David A. Robinson. A method of measuring eye movement using a scieral search coil in a magnetic field. IEEE Transactions on Bio-medical Electronics, 10(4):137-145, oct 1963.

[17] Jatin Sharma, Jon Campbell, Pete Ansell, Jay Beavers, and Christopher O'Dowd. Towards hardware-agnostic gaze-trackers, 2020.

[18] Dan Su, You-Fu Li, and Hao Chen. Toward precise gaze estimation for mobile head- mounted gaze tracking systems. IEEE Transactions on Industrial Informatics, PP:1-1, 08 2018.

[19] Zhiwei Zhu, Qiang Ji, K. Fujimura, and Kuangchih Lee. Combining kalman filtering and mean shift for real time eye tracking under active ir illumination. volume 4, pages 318 - 321 vol.4, 02 2002.

Description of the Invention

The object of the present invention is thus to accurately and reliably track and quantify visual attention, without the need of outporting potentially sensitive and private user data anywhere. This object is fulfilled by a method with the characteristics of claim 1 and by a computing device according to claim 11.

To this end, embodiments of the present invention provide, according to a first aspect, a method for tracking and quantifying visual attention on a computing device, for example a smartphone, among others. The method comprises acquiring, using a camera of the computing device, photo frames of a user when the user is looking at the computing device; detecting, by a processor, a user's face within each frame of said acquired photo frames and both eyes of the user within the detected user's face, providing a plurality of 3D eye and face images (e.g. RBG-D images) as a result; feeding the plurality of 3D eye and face images to a first machine learning algorithm comprising a set of sub-algorithms, wherein each one of said set of sub-algorithms transforms the right eye into a left eye by performing a specular reflection through a vertical line that intercepts the center of a frontal lens of the camera, providing a new set of transformed images as a result; and estimating, by the processor, a user's attention by feeding the new set of transformed images to a second machine learning algorithm, the latter reverting said specular reflection.

In some embodiments, the method additionally executes a meta-gaze estimation procedure by using a Long Short-Term Memory (LSTM) architecture that considers a set of historical (i.e. past) eye gaze measurements (or estimations) across time and produces an estimation of the eye gaze at a given time based on the historical eye gaze measurements. The use of previous estimations produces more accurate single image gaze estimations.

In an embodiment, the detecting step besides detecting the user's face and both eyes further comprises detecting a depth map of the user's face, which comprises a mesh mapping out distances between different zones of the user's face. Likewise, previous to the feeding step the method comprises performing, by the processor, a similarity measure using the mesh, and discarding redundant photo frames in which the user is looking at a same area of attention using a filtering mechanism.

Particularly, the depth map and so the mesh is computed with the use of the LiDAR technology (i.e. the camera is a time-of-flight camera, and more particularly a LiDAR). Smartphones with this type of camera tech send waves of light pulses out in a spray of infrared dots and can measure each one with their sensor, creating a field of points that map out distances and can "mesh" the dimensions of a space and the objects in it. The light pulses are invisible to the human eye. The result of this process is a mesh of the depth map, which consists of coarse meshed triangles.

In some embodiments, the first machine learning algorithm comprises a Neural Network and the set of sub-algorithms are a set of convolutional neural networks. The second machine learning algorithm particularly comprises a Fully Connected Neural Network (FCNN).

In an embodiment, before said feeding step, a resizing procedure of the eyes and face is applied to the plurality of 3D eye and face images, obtaining a plurality of resized 3D eye and face images as a result. Thus, in some embodiments, the processor further concatenates the original height and width of the photo frames to the plurality of resized 3D eye and face images.

In some embodiments, previous to said acquiring step, the method comprises acquiring, by the computing device, motion and orientation data (or other similar sensory data acquired via embedded sensors on the computing device) of the user when (s)he is looking at the computing device and using the acquired motion and orientation data by the LSTM architecture for improving the eye gaze estimation.

In some embodiments, the method also comprises comparing the estimated user's attention with historical data of the user stored in a database and further inferring, by the processor, future predictions of the user's attention based on a result of the comparison.

Embodiments of the present invention also provide, according to a second aspect, a system for tracking and quantifying visual attention on a computing device. The system includes a computing device having one or more cameras, such as a smartphone, a tablet, any operator-owned device that has access to data or a users' owned device (e.g. a mobile phone) as a native application, to acquire photo frames of a user when the user is looking at the computing device. The system also includes a computing system comprising at least one memory and a processor, wherein the processor is configured to: detect a user's face within each frame of said acquired photo frames and both eyes of the user within the detected user's face, providing a plurality of 3D eye and face images as a result; feed the plurality of 3D eye and face images to a first machine learning algorithm comprising a set of sub-algorithms, wherein each one of said set of sub-algorithms transforms the right eye into a left eye by performing a specular reflection through a vertical line that intercepts the center of a frontal lens of the camera, providing a new set of transformed images as a result; estimate a user's attention by feeding the new set of transformed images to a second machine learning algorithm, the latter reverting said specular reflection.

In an embodiment, the one or more cameras are depth cameras, particularly LiDAR cameras.

Other embodiments of the invention that are disclosed herein also include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Thus, present invention is a programmatic and scalable diagnostic technology for attention measurement on computing devices that uses photo frames, coupled with depth sensor information, on top of the usual RGB (Red, Green, Blue) pixel data acquired by mobile device cameras, and optionally other sensory data (e.g., motion and orientation) acquired via embedded sensors on a computing device. Depth information can either be estimated with post computer visual processing or acquired directly with high precision, using advanced LiDAR sensors that newer smartphone models are currently equipped with. Furthermore, the invention proposes the use of "lightweight" Deep Learning (DL) techniques to achieve an accurate and robust gaze point estimation without the need of extensive calibration. Unlike prior art, the invention may also consider the use of historical information to inform future predictions and examine how such models can be tailored to each user by injecting personalized data. In addition, the invention proposes a more lightweight Neural Network (NN) architecture, suitable for the processing power of mobile devices, that also leverages the use of video or photo frames with depth sensory data.

Brief Description of the Drawings

The previous and other advantages and features will be more fully understood from the following detailed description of embodiments, with reference to the attached figures, which must be considered in an illustrative and non-limiting manner, in which:

FIG. 1 schematically illustrates an embodiment of the present invention architecture.
FIG. 2 shows an example of the LSTM network architecture.
FIG. 3 is an example of the application of Redundant Frame Elimination (RFE).
FIG. 4 illustrates an example of data augmentation via the application of specular reflections.

Detailed Description of Preferred Embodiments

To accurately and reliably track and quantify visual attention present invention can, particularly, be divided in a two-step approach: a single frame gaze estimation approach and a meta system based on the gaze estimations of the former.

Single Frame Gaze Estimation.-

In an embodiment, the method starts by detecting the user's face within each acquired photo frame when the user is looking at a computing device, for example a smartphone, among others, having at least one camera, particularly, but not limited to, a depth camera such as a LiDAR. Within the detected face, both eyes are detected, and the images are cropped from the original photo frame. This procedure generates several, particularly more than three, RBG-D (Red, Blue, Green and Depth) images (i.e. 3D images) that will feed a first machine learning algorithm, particularly a Neural Net (NN) comprising a set of Convolutional Neural Net (CNN). The face processing CNN can be fed with either the face RBG image or the D image.

Particularly, at this stage, the invention "recycles" the eyes sub-architecture. That is, both eye images are sent to the same Sub-NN to improve the performance of the system. The right eye is transformed by means of performing a specular reflection versus the y axis into a left eye.

Next, a second machine learning algorithm, particularly a Fully Connected Neural Net (FCNN), which is responsible of generating the attention estimation FCNN based on a single frame, undoes the specular reflection.

In some embodiments, a resizing procedure is performed before feeding the images into the NN. This resizing procedure helps removing implicit information of the user's location i.e., distance of the user to the camera. That is, for those users that are farther away from the camera, their images should be smaller. Resizing face and eyes removes this implicit information. Therefore, to avoid losing this information, after processing each image through the CNN information about original location, height and width of the image is concatenated to feed the FCNN.

At this point in time an (x, y) attention estimation is generated for each single frame.

Meta-gaze Estimation.-

When humans are fixating at a target, their eyes produce unconscious micro movements around the focus of attention. If the invention makes use of a single frame, a fraction of the gaze estimation error is due to this micro movements. By considering several of these gaze estimations at the same time, the invention aims at cancelling out this type of errors. The challenge is in detecting when the user is looking at the same target, and the method can benefit from using more than one frame and when the user has changed the point they are staring at. For these reasons, in some embodiments, a Long Short-Term Memory (LSTM) architecture considering a set of historical eye gaze measurements across time and producing an estimation of the eye gaze at a given time based on the historical eye gaze measurements is used. A preliminary analysis indicates that a 10% performance increase is achieved by using multiple-frame estimation instead of a single-frame gaze estimation.

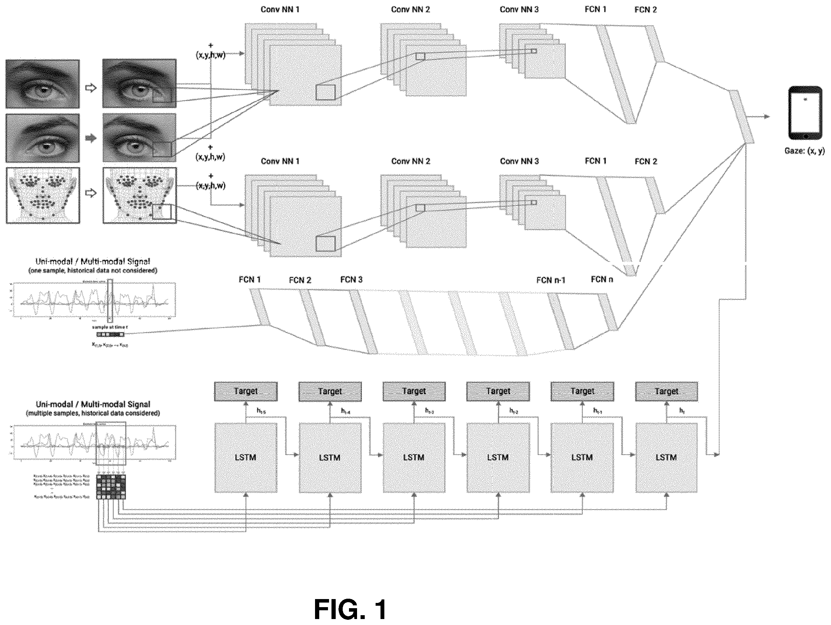

FIG. 1 illustrates an embodiment of the proposed architecture/framework of how image data as well as time series data (e.g. motion and orientation, among others) can be fused for a common objective, i.e. detecting attention. Particularly, the acquisition process of motion, orientation, or other time series-like signals, is provided using APIs from the mobile operating system. In this particular embodiment, different 3D eye and face images are considered. Moreover, two different imaging processing methods are shown: 1) considering one sample at a time; and 2) considering a sequence of samples, thus taking into account (historical) data from previous steps.

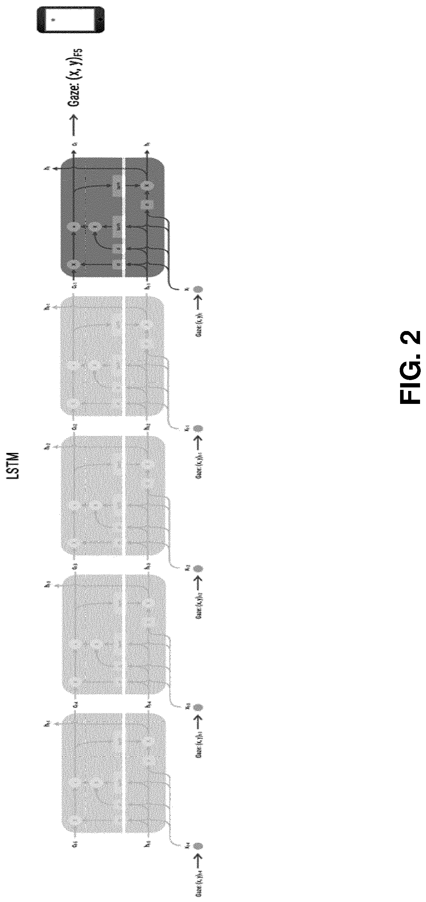

FIG. 2 graphically represents how by using the cited LSTM architecture a final gaze estimation is obtained. Particularly, present invention treats a sequence of N consecutive gaze estimations as a time series problem, where the task is to produce a better gaze estimation. The underlying intuition is as follows: if all previous gaze estimations could be considered as the point plus an unbiased error term by averaging them, the method would obtain an estimator with less variance. In general, all gaze estimations cannot be considered as the same point plus an unbiased error term, thus the method lets the LSTM learn a proper statistic that improves the overall performance. Studies have shown, but not limit, that using 5 frames 10 milli-seconds apart produced optimal results.

In some embodiments, besides detecting the user's face and both eyes the method also comprises detecting a depth map of the user's face. So, a similarity measure can be established between face meshes. Face meshes are predefined graphs, where each node corresponds to a concrete location of the face. Therefore, given two (or more) face meshes, the proposed method can define a distance relationship among them by aggregating the distances of each labeled node.

$$d(m_1, m_2) = \sum_{i=1}^{\#mesh} d\big(n_{1,i}, n_{2,i}\big)$$

where:

- $d(m_1, m_2)$ is the distance among two face meshes
- $d(n_{1,i}, n_{2,i})$ is the distance among two nodes with the same label.
- #*mesh* is the number of nodes in the mesh

The proposed approach is flexible, in the sense that one can introduce various distance metrics (e.g., Kullback-Leibler divergence) to measure similarity. During the data acquisition process, many photo frames can be captured while the user is fixating at the same area of attention. Therefore, frames that are highly similar and provide redundant information can be filtered via a filtering mechanism, for instance, a Redundant Frame Elimination (RFE) mechanism, without diminishing the system accuracy, while at the same time improving the model's performance. By doing so, the volume of data that has to feed the model, whether for training or evaluation purposes, can be significantly reduced and, hence, the attention measurement process be improved.

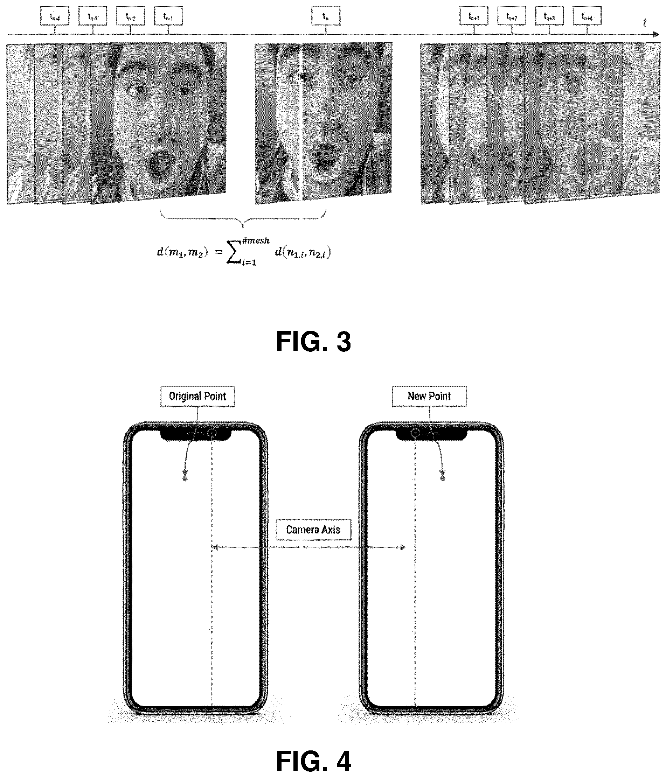

Together with the formerly described two-steps systems architecture/approach, in some embodiments, a set of calibration methodologies are further developed/implemented to improve performance. First, as explained, images can be recycled by applying specular reflections on the y axis. This creates a new training example. The problem is that this new training example would only be gazing at the same point if the camera is set in the central axis of the device. This is usually not the case. Fig. 4 presents a mobile device where the camera is not centered therefore a symmetry must be applied with respect to the camera axis to create a new point for the training set.

Also, to improve the system accuracy, a generic calibration based on many different users can be refined to a single user. The user is required to stare at a set of predetermined points. The system is recalibrated with this new training set.

Various aspects of the proposed method, as described herein, may be embodied in programming. Program aspects of the technology may be thought of as "products" or "articles of manufacture" typically in the form of executable code and/or associated data that is carried on or embodied in a type of machine readable medium. Tangible non-transitory "storage" type media include any or all of the memory or other storage for the computers, processors, or the like, or associated modules thereof, such as various semiconductor memories, tape drives, disk drives and the like, which may provide storage at any time for the software programming. All or portions of the software may at times be communicated through a network such as the Internet or various other telecommunication networks. Such communications, for example, may enable loading of the software from one computer or processor into another, for example, from a management server or host computer of a scheduling system into the hardware platform(s) of a computing environment or other system implementing a computing environment or similar functionalities in connection with image processing. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to tangible "storage" media, terms such as computer or machine "readable medium" refer to any medium that participates in providing instructions to a processor for execution.

Those skilled in the art will recognize that the present teachings are amenable to a variety of modifications and/or enhancements within the scope of the claims. For example, although the implementation of various components described herein may be embodied in a hardware device, it may also be implemented as a software only solution-e.g., an installation on an existing server. In addition, image processing as disclosed herein may be implemented as a firmware, firmware/software combination, firmware/hardware combination, or a hardware/firmware/software combination. The present disclosure and/or some other examples have been described in the above.

According to descriptions above, various alterations within the scope of the claims may be achieved. The topic of the present disclosure may be achieved in various forms and embodiments, and the present disclosure may be further used in a variety of application programs. All applications, modifications and alterations required to be protected in the claims may be within the protection scope of the present disclosure.

The scope of the present invention is defined in the following set of claims.

**Claims**

1. A method for tracking and quantifying visual attention on a computing device, comprising:

   detecting, by a processor, a user's face within each frame of acquired photo frames of a user and both eyes of the user within the detected user's face, and cropping the face and eyes images from the acquired photo frames, generating several 3D eye and face images as a result,
   the photo frames being acquired using a camera of a computing device, including a smartphone or a tablet, when the user is looking at the computing device, and the photo frames including depth information, the latter being directly captured by the camera being a depth camera or being inferred from the acquired photo frames by post-processing the acquired photo frames;
   detecting, by the processor, a depth map of the user's face, the depth map comprising a mesh mapping out distances between different zones of the user's face;
   performing, by the processor, a similarity measure using the mesh, and discarding redundant photo frames in which the user is looking at a same area of attention using a filtering mechanism;
   feeding the 3D eye and face images to a first machine learning algorithm comprising a set of sub-algorithms, both eye images being sent to a same sub-algorithm of the set of sub-algorithms;
   transforming, by said sub-algorithm, the right eye into a left eye by performing a specular reflection on the y axis, providing a new set of transformed images as a result;
   estimating, by the processor, a user's attention by feeding the new set of transformed images to a second machine learning algorithm, the latter reverting said specular reflection.

2. The method of claim 1, further comprising executing a meta-gaze estimation procedure by using a Long Short-Term Memory, LSTM, architecture that considers a set of historical eye gaze measurements across time and produces an estimation of the eye gaze at a given time based on the historical eye gaze measurements.

3. The method of claim 1, wherein the first machine learning algorithm comprises a Neural Network, the set of sub-algorithms being a set of convolutional neural networks.

4. The method of any one of the previous claims, wherein previous to said feeding step a resizing procedure of the eyes and face is applied to the 3D eye and face images, obtaining resized 3D eye and face images as a result.

5. The method of any one of the previous claims, wherein the second machine learning algorithm comprises a Fully Connected Neural Network, FCNN.

6. The method of claims 4 or 5, further comprising concatenating an original height and width of the photo frames to the resized 3D eye and face images.

7. The method of claim 2, further comprising obtaining time series data of the user including motion and orientation data using APIs from the computing device, and using the obtained time series data by the LSTM architecture for improving the eye gaze estimation.

8. The method of any one of the previous claims, wherein the 3D eye and face images comprises RBG-D images.

9. The method of any one of the previous claims, wherein the 3D eye and face images comprises at least three images.

10. The method of any one of the previous claims, further comprising comparing the estimated user's attention with historical data of the user stored in a database and further inferring, by the processor, future predictions of the user's attention based on a result of the comparison.

11. A computing device for tracking and quantifying visual attention, the computing device including a smartphone or a tablet, and comprising:

    one or more cameras;
    a computing system comprising at least one memory and a processor, wherein the processor is configured to:
    detect a user's face within each frame of acquired photo frames of a user and both eyes of the user within the detected user's face, and cropping the face and eyes images from the acquired photo frames, generating several 3D eye and face images as a result,
    the photo frames being acquired using the one or more cameras when the user is looking at the computing device, and the photo frames including depth information, the latter being directly captured by the one or more cameras being depth cameras or being inferred from the acquired photo frames by post-processing the acquired photo frames;

    detect a depth map of the user's face, the depth map comprising a mesh mapping out distances between different zones of the user's face;
    perform a similarity measure using the mesh, and discard redundant photo frames in which the user is looking at a same area of attention using a filtering mechanism;
    feed the 3D eye and face images to a first machine learning algorithm comprising a set of sub-algorithms, both eye images being sent to a same sub-algorithm of the set of sub-algorithms;
    transform, by said sub-algorithm, the right eye into a left eye by performing a specular reflection on the y axis, providing a new set of transformed images as a result;
    estimate a user's attention by feeding the new set of transformed images to a second machine learning algorithm, the latter reverting said specular reflection.

12. The computing device of claim 11, wherein the first machine learning algorithm comprises a Neural Network, the set of sub-algorithms being a set of convolutional neural networks and the second machine learning algorithm comprises a Fully Connected Neural Network, FCNN.

13. The computing device of claim 11 or 12, wherein the 3D eye and face images comprises RBG-D images.

**Patentansprüche**

1. Verfahren zum Verfolgen und Quantifizieren der visuellen Aufmerksamkeit an einer Datenverarbeitungsvorrichtung, das umfasst:

    Erfassen, durch einen Prozessor, des Gesichts eines Benutzers innerhalb jedes Einzelbildes von aufgenommenen Fotoeinzelbildern eines Benutzers und beider Augen des Benutzers innerhalb des erfassten Gesichts des Benutzers und Ausschneiden der Gesichts- und Augenbilder aus den aufgenommenen Fotoeinzelbildern, wodurch als Ergebnis mehrere 3D-Augen- und Gesichtsbilder erzeugt werden,
    die Fotoeinzelbilder unter Verwendung einer Kamera einer Datenverarbeitungsvorrichtung einschließlich eines Smartphones oder eines Tablets aufgenommen werden wenn der Benutzer auf die Datenverarbeitungsvorrichtung blickt, und die Fotoeinzelbilder Tiefeninformationen einschließen, wobei die letztgenannten direkt durch die Kamera aufgenommen werden, bei der es sich um eine Tiefenkamera handelt, oder aus den aufgenommenen Fotoeinzelbildern durch Nachbearbeiten der aufgenommenen Fotoeinzelbilder abgeleitet werden;

Erfassen, durch den Prozessor, einer Tiefenkarte des Gesichts des Benutzers, wobei die Tiefenkarte ein Netz umfasst, das Abstände zwischen verschiedenen Zonen des Gesichts des Benutzers abbildet;

Durchführen, durch den Prozessor, einer Ähnlichkeitsmessung unter Verwendung des Netzes und Verwerfen redundanter Fotoeinzelbilder, in denen der Benutzer auf denselben Bereich der Aufmerksamkeit blickt, unter Verwendung eines Filtermechanismus;

Einspeisen der 3D-Augen- und Gesichtsbilder in einen ersten Algorithmus für maschinelles Lernen, der einen Satz von Teilalgorithmen umfasst, wobei beide Augenbilder an denselben Teilalgorithmus des Satzes von Teilalgorithmen gesendet werden;

Transformieren, durch den Teilalgorithmus, des rechten Auges in ein linkes Auge, indem eine Spiegelung an der y-Achse durchgeführt wird, wodurch ein neuer Satz transformierter Bilder entsteht;

Schätzen, durch den Prozessor, der Aufmerksamkeit des Benutzers, indem der neue Satz transformierter Bilder in einen zweiten Algorithmus für maschinelles Lernen eingespeist wird, wobei der letztgenannte die Spiegelung umkehrt.

2. Verfahren nach Anspruch 1, das ferner das Ausführen einer Meta-Blickschätzungsprozedur unter Verwendung einer Long-Short-Term-Memory-Architektur, STM-Architektur, die einen Satz historischer Augenblickmessungen über die Zeit hinweg berücksichtigt und eine Schätzung des Augenblicks zu einem bestimmten Zeitpunkt basierend auf den historischen Augenblickmessungen erzeugt.

3. Verfahren nach Anspruch 1, wobei der erste Algorithmus für maschinelles Lernen ein neuronales Netz umfasst, wobei der Satz von Teilalgorithmen ein Satz von neuronalen Faltungsnetzen ist.

4. Verfahren nach einem der vorhergehenden Ansprüche, wobei der vorhergehende Einspeisungsschritt eine Größenänderungsprozedur der Augen und des Gesichts auf die 3D-Augen- und Gesichtsbilder anwendet, wodurch als Ergebnis größenveränderte 3D-Augen- und Gesichtsbilder erhalten werden.

5. Verfahren nach einem der vorhergehenden Ansprüche, wobei der zweite Algorithmus für maschinelles Lernen ein Fully Connected Neural Network, FCNN, umfasst.

6. Verfahren nach Anspruch 4 oder 5, das ferner das Verketten einer ursprünglichen Höhe und Breite der Fotoeinzelbilder mit den größenveränderten 3D-Augen- und Gesichtsbildern umfasst.

7. Verfahren nach Anspruch 2, das ferner das Erhalten von Zeitreihendaten des Benutzers einschließlich Bewegungs- und Orientierungsdaten unter Verwendung von APIs aus der Datenverarbeitungsvorrichtung und das Verwenden der erhaltenen Zeitreihendaten durch die LSTM-Architektur umfasst, um die Augenblickschätzung zu verbessern.

8. Verfahren nach einem der vorhergehenden Ansprüche, wobei die 3D-Augen- und Gesichtsbilder RBG-D-Bilder umfassen.

9. Verfahren nach einem der vorhergehenden Ansprüche, wobei die 3D-Augen- und Gesichtsbilder mindestens drei Bilder umfassen.

10. Verfahren nach einem der vorhergehenden Ansprüche, das ferner das Vergleichen der geschätzten Aufmerksamkeit des Benutzers mit historischen Daten des Benutzers, die in einer Datenbank gespeichert sind, und ferner das Ableiten, durch den Prozessor, zukünftiger Vorhersagen der Aufmerksamkeit des Benutzers basierend auf einem Ergebnis des Vergleichs umfasst.

11. Datenverarbeitungsvorrichtung zum Verfolgen und Quantifizieren der visuellen Aufmerksamkeit, wobei die Datenverarbeitungsvorrichtung ein Smartphone oder ein Tablet einschließt und umfasst:

eine oder mehrere Kameras;
ein Datenverarbeitungssystem, das mindestens einen Speicher und einen Prozessor umfasst, wobei der Prozessor konfiguriert ist zum:
Erfassen des Gesichts eines Benutzers innerhalb jedes Einzelbildes von aufgenommenen Fotoeinzelbildern eines Benutzers und beider Augen des Benutzers innerhalb des erfassten Gesichts des Benutzers und Ausschneiden der Gesichts- und Augenbilder aus den aufgenommenen Fotoeinzelbildern, wodurch als Ergebnis mehrere 3D-Augen- und Gesichtsbilder erzeugt werden,
wobei die Fotoeinzelbilder unter Verwendung der einen oder mehreren Kameras aufgenommen werden, wenn der Benutzer auf die Datenverarbeitungsvorrichtung blickt,
und die Fotoeinzelbilder Tiefeninformationen einschließen, wobei die letztgenannten direkt durch die eine oder die mehreren Kameras aufgenommen werden, bei denen es sich um Tiefenkameras handelt, oder aus den aufgenommenen Fotoeinzelbildern durch Nachbearbeiten der aufgenommenen Fotoeinzelbilder abgeleitet werden;

Erfassen einer Tiefenkarte des Gesichts des Benutzers, wobei die Tiefenkarte ein Netz umfasst, das Abstände zwischen verschiedenen Zonen des Gesichts des Benutzers abbildet;
Durchführen einer Ähnlichkeitsmessung unter Verwendung des Netzes und Verwerfen redundanter Fotoeinzelbilder, in denen der Benutzer auf denselben Bereich der Aufmerksamkeit blickt, unter Verwendung eines Filtermechanismus;
Einspeisen der 3D-Augen- und Gesichtsbilder in einen ersten Algorithmus für maschinelles Lernen, der einen Satz von Teilalgorithmen umfasst, wobei beide Augenbilder an denselben Teilalgorithmus des Satzes von Teilalgorithmen gesendet werden;
Transformieren, durch den Teilalgorithmus, des rechten Auges in ein linkes Auge, indem eine Spiegelung an der y-Achse durchgeführt wird, wodurch ein neuer Satz transformierter Bilder entsteht;
Schätzen der Aufmerksamkeit des Benutzers, indem der neue Satz transformierter Bilder in einen zweiten Algorithmus für maschinelles Lernen eingespeist wird, wobei der letztgenannte die Spiegelung umkehrt.

12. Datenverarbeitungsvorrichtung nach Anspruch 11, wobei der erste Algorithmus für maschinelles Lernen ein neuronales Netz umfasst, wobei der erste Satz von Teilalgorithmen ein Satz von neuronalen Faltungsnetzen ist und der zweite Algorithmus für maschinelles Lernen ein Fully Connected Neural Network, FCNN, umfasst.

13. Datenverarbeitungsvorrichtung nach Anspruch 11 oder 12, wobei die 3D-Augen- und Gesichtsbilder RBG-D-Bilder umfassen.

**Revendications**

1. Procédé de suivi et de quantification d'attention visuelle sur un dispositif informatique, comprenant :

la détection, par un processeur, du visage d'un utilisateur dans chaque trame de trames photographiques acquises d'un utilisateur et des deux yeux de l'utilisateur dans le visage de l'utilisateur détecté, et le recadrage des images du visage et des yeux à partir des trames photographiques acquises, générant en conséquence plusieurs images 3D des yeux et du visage,

les trames photographiques étant acquises à l'aide d'un appareil photo d'un dispositif informatique, incluant un smartphone ou une tablette, lorsque l'utilisateur regarde le dispositif informatique, et les trames photographiques incluant des informations de profondeur, ces dernières étant directement capturées par l'appareil photo étant un appareil photo de profondeur ou étant déduites à partir des trames photographiques acquises par post-traitement des trames photographiques acquises ;
la détection, par le processeur, d'une carte de profondeur du visage de l'utilisateur, la carte de profondeur comprenant un maillage cartographiant les distances entre différentes zones du visage de l'utilisateur ;
la réalisation, par le processeur, d'une mesure de similarité à l'aide du maillage, et l'élimination de trames photographiques redondantes dans lesquelles l'utilisateur regarde une même zone d'attention à l'aide d'un mécanisme de filtrage ;
la transmission des images 3D des yeux et du visage à un premier algorithme d'apprentissage automatique comprenant un ensemble de sous-algorithmes, les images des deux yeux étant envoyées à un même sous-algorithme de l'ensemble de sous-algorithmes ;
la transformation, par ledit sous-algorithme, de l'œil droit en un œil gauche en réalisant une réflexion spéculaire sur l'axe y, fournissant en conséquence un nouvel ensemble d'images transformées ;
l'estimation, par le processeur, de l'attention d'un utilisateur en transmettant le nouvel ensemble d'images transformées à un second algorithme d'apprentissage automatique, ce dernier inversant ladite réflexion spéculaire.

2. Procédé selon la revendication 1, comprenant en outre l'exécution d'une procédure d'estimation de méta-regard à l'aide d'une architecture de mémoire à long et court terme, LSTM, qui prend en compte un ensemble de mesures historiques de regard oculaire dans le temps et produit une estimation du regard oculaire à un moment donné sur la base des mesures historiques de regard oculaire.

3. Procédé selon la revendication 1, dans lequel le premier algorithme d'apprentissage automatique comprend un réseau neuronal, l'ensemble de sous-algorithmes étant un ensemble de réseaux neuronaux convolutifs.

4. Procédé selon l'une quelconque des revendications précédentes, dans lequel, avant ladite étape de transmission, une procédure de redimensionnement des yeux et du visage est appliquée aux images 3D des yeux et du visage, obtenant en conséquence des images 3D redimensionnées des yeux et du visage.

5. Procédé selon l'une quelconque des revendications précédentes, dans lequel le second algorithme d'apprentissage automatique comprend un réseau neuronal interconnecté, FCNN.

6. Procédé selon les revendications 4 ou 5, comprenant en outre la concaténation d'une hauteur et une largeur d'origine des trames photographiques dans les images 3D redimensionnées des yeux et du visage.

7. Procédé selon la revendication 2, comprenant en outre l'obtention de données de séries temporelles de l'utilisateur, incluant les données de mouvement et d'orientation, à l'aide d'API à partir du dispositif informatique, et l'utilisation des données de séries temporelles obtenues par l'architecture LSTM pour améliorer l'estimation du regard oculaire.

8. Procédé selon l'une quelconque des revendications précédentes, dans lequel les images 3D des yeux et du visage comprennent des images RBG-D.

9. Procédé selon l'une quelconque des revendications précédentes, dans lequel les images 3D des yeux et du visage comprennent au moins trois images.

10. Procédé selon l'une quelconque des revendications précédentes, comprenant en outre la comparaison de l'attention estimée de l'utilisateur avec des données historiques de l'utilisateur stockées dans une base de données et, en outre, la déduction, par le processeur, de prévisions futures de l'attention de l'utilisateur sur la base d'un résultat de la comparaison.

11. Dispositif informatique permettant de suivre et de quantifier l'attention visuelle, le dispositif informatique incluant un smartphone ou une tablette, et comprenant :

un ou plusieurs appareils photo ;
un système informatique comprenant au moins une mémoire et un processeur, dans lequel le processeur est configuré pour :
détecter le visage d'un utilisateur dans chaque trame de trames photographiques acquises d'un utilisateur et les deux yeux de l'utilisateur dans le visage de l'utilisateur détecté, et le recadrage des images du visage et des yeux à partir des trames photographiques acquises, générant en conséquence plusieurs images 3D des yeux et du visage,
les trames photographiques étant acquises à l'aide des un ou plusieurs appareils photo lorsque l'utilisateur regarde le dispositif informatique, et les trames photographiques incluant des informations de profondeur, ces dernières étant directement capturées par les un ou plusieurs appareils photo étant des appareils photo de profondeur ou étant déduites partir des trames photographiques acquises par post-traitement des trames photographiques acquises ;

détecter une carte de profondeur du visage de l'utilisateur, la carte de profondeur comprenant un maillage cartographiant des distances entre différentes zones du visage de l'utilisateur ;
réaliser une mesure de similarité à l'aide du maillage, et éliminer des trames photographiques redondantes dans lesquelles l'utilisateur regarde une même zone d'attention à l'aide d'un mécanisme de filtrage ;
transmettre des images 3D des yeux et du visage à un premier algorithme d'apprentissage automatique comprenant un ensemble de sous-algorithmes, les images des deux yeux étant envoyées à un même sous-algorithme de l'ensemble de sous-algorithmes ;
transformer, par ledit sous-algorithme, l'œil droit en un œil gauche en réalisant une réflexion spéculaire sur l'axe y, fournissant en conséquence un nouvel ensemble d'images transformées ;
estimer l'attention d'un utilisateur en transmettant le nouvel ensemble d'images transformées à un second algorithme d'apprentissage automatique, ce dernier inversant ladite réflexion spéculaire.

12. Dispositif informatique selon la revendication 11, dans lequel le premier algorithme d'apprentissage automatique comprend un réseau neuronal, l'ensemble de sous-algorithmes étant un ensemble de réseaux neuronaux convolutifs et le second algorithme d'apprentissage automatique comprend un réseau neuronal interconnecté, FCNN.

13. Dispositif informatique selon la revendication 11 ou 12, dans lequel les images 3D des yeux et du visage comprennent des images RBG-D.

**FIG. 1**

FIG. 2

$$d(m_1, m_2) = \sum_{i=1}^{\#mesh} d(n_{1,i}, n_{2,i})$$

# FIG. 3

Original Point

New Point

Camera Axis

# FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170177081 A1
- US 20160135675 A1
- US 9459451 B2
- WO 2016183464 A1
- US 2017196451 A1

**Non-patent literature cited in the description**

- Learning A 3D Gaze Estimator with Improved Itracker Combined with Bidirectional LSTM. **ZHOU XIAO-LONG et al.** 2019 IEEE INTERNATIONAL CONFERENCE ON MULTIMEDIA AND EXPO (ICME). IEEE, 08 July 2019, 850-855
- **BRAIDEN BROUSSEAU** ; **JONATHAN ROSE** ; **MOSHE EIZENMAN**. Hybrid eye-tracking on a smart- phone with cnn feature extraction and an infrared 3d model. *Sensors*, 2020, vol. 20 (2)
- **ANDREAS BULLING** ; **DANIEL ROGGEN** ; **GERHARD TRO**. Wearable EOG goggles: Seamless sensing and context-awareness in everyday environments. *Journal of Ambient Intelligence and Smart Environments*, 2009, vol. 1 (2), 157-171
- **ILKE DEMIR** ; **UMUR A. CIFTCI**. *Where do deep fakes look? synthetic face detection via gaze tracking*, 2021
- **AMOGH GUDI** ; **XIN LI** ; **JAN VAN GEMERT**. *Efficiency in real-time webcam gaze tracking*, 2020
- **QIONG HUANG** ; **ASHOK VEERARAGHAVAN** ; **ASHUTOSH SABHARWAL**. *Tabletgaze: Unconstrained appearance-based gaze estimation in mobile tablets*, 2016
- **A. KHALDI** ; **E. DANIEL** ; **L. MASSIN** ; **CAMILLA KÄRNFELT** ; **F. FERRANTI** ; **C. LAHUEC** ; **F. S'EGUIN** ; **V. NOURRIT** ; **J. DE BOUGRENET DE LA TOCNAYE**. A laser emitting contact lens for eye tracking. *Scientific Reports*, 2020, vol. 10
- **KYLE KRAFKA** ; **ADITYA KHOSLA** ; **PETR KELLNHOFER** ; **HARINI KANNAN** ; **SUCHENDRA BHANDARKAR** ; **WOJCIECH MATUSIK** ; **ANTONIO TORRALBA**. *Eye tracking for everyone*, 2016
- **B. LI** ; **HONG FU** ; **DESHENG WEN** ; **W. LO**. Etracker: A mobile gaze-tracking system with near-eye display based on a combined gaze-tracking algorithm. *Sensors*, 2018, vol. 18
- **KRISTIAN LUKANDER** ; **S. JAGADEESAN** ; **H. CHI** ; **K. MULLER**. Omg!: a new robust, wearable and affordable open source mobile gaze tracker. *In MobileHCI '13*, 2013
- **LOIC MASSIN** ; **FABRICE SEGUIN** ; **VINCENT NOURRIT** ; **DANIEL EMMANUEL** ; **JEAN-LOUIS TOCNAYE** ; **CYRIL LAHUEC**. Smart contact lens applied to gaze tracking. *IEEE Sensors Journal*, July 2020, vol. 21, 1-1
- **ADDISON MAYBERRY** ; **PAN HU** ; **BENJAMIN MARLIN** ; **CHRISTOPHER SALTHOUSE** ; **DEEPAK GANESAN**. Ishadow: Design of a wearable, real-time mobile gaze tracker. *In Proceedings of the 12th Annual International Conference on Mobile Systems, Applications, and Services, Mo- biSys '14*, 2014, 82-94
- **TAKASHI NAGAMATSU** ; **MICHIYA YAMAMOTO** ; **HIROSHI SATO**. Mobigaze: Development of a gaze interface for handheld mobile devices. *In CHI '10 Extended Abstracts on Human Factors in Computing Systems, CHI EA '10*, 2010, 3349-3354
- **DAVID A. ROBINSON**. A method of measuring eye movement using a scieral search coil in a magnetic field. *IEEE Transactions on Bio-medical Electronics*, October 1963, vol. 10 (4), 137-145
- **JATIN SHARMA** ; **JON CAMPBELL** ; **PETE ANSELL** ; **JAY BEAVERS** ; **CHRISTOPHER O'DOWD**. *Towards hardware-agnostic gaze-trackers*, 2020
- **DAN SU** ; **YOU-FU LI** ; **HAO CHEN**. Toward precise gaze estimation for mobile head- mounted gaze tracking systems. *IEEE Transactions on Industrial Informatics*, August 2018, 1-1
- **ZHIWEI ZHU** ; **QIANG JI** ; **K. FUJIMURA** ; **KUANG-CHIH LEE**. *Combining kalman filtering and mean shift for real time eye tracking under active ir illumination*, February 2002, vol. 4, 318-321